# EUROPEAN PATENT APPLICATION

(11) **EP 3 572 537 A1**
(43) Date of publication of application: **27.11.2019**
(21) Application number: 18020230.1
(22) Date of filing: 24.05.2018
(51) Int. Cl.: C22B 13/02, C03B 5/235, F23N 5/00, F23C 6/04, F23L 7/00, C22B 21/00, F27B 3/20, F27B 3/22, F27D 7/06

(54) **A METHOD FOR OPERATING A LEAD MELTING FURNACE AND LEAD MELTING FURNACE**

(71) Applicant: Linde Aktiengesellschaft, 80331 München (DE)
(72) Inventor: Adendorff, Martin, Pudong, Shanghai 200122 (CN); Bermel, Curtis Lee, Wheaton, Illinois 60187-3573 (US)
(74) Representative: Gellner, Bernd

(57) **Abstract**

The present invention relates to a method for operating a lead melting furnace (100) for melting a lead metallic material, wherein a first oxidant and fuel are provided to at least one burner unit (120, 121) such that combustion with a lambda value less than 1.3 is performed and wherein a second oxidant is injected into the lead melting furnace (100) such that an oxidation of at least one product in an off-gas (125) of the combustion with the injected second oxidant is performed.

## Description

The present invention relates to a method for operating a lead melting furnace and to such a lead melting furnace for melting a lead metallic material.

### Prior art

In a lead melting furnace for melting lead metallic material, burners can be used to perform combustion of a fuel, e.g. natural gas, methane or propane e.g. with the addition of coke in the charge mix as a reducing agent, and an oxidant, usually air and/or oxygen. An off-gas or combustion gas is produced in the course of the combusting, particularly comprising carbon monoxide CO, carbon dioxide CO₂ and H₂O.

The lead metallic material to be melted in the lead melting furnaces is in direct contact with the combusting fuel or a flame of the combustion and in direct contact with the combustion gas or off-gas. Thus, the conduction of heat by direct contact of flames impinging on the lead metallic bath as well as radiation of heat from the hot off-gas are used to heat and to melt the metallic material. Thermal radiation within the furnace is reflected or reverberated from the walls and the ceiling of the furnace.

In lead melting furnaces one drawback of traditional melting, especially with lower melting point metals such as lead is the tendency to over-oxidize the metal bath and oxidize or even vaporise the base metal, which reduces the productivity and the metallic yield of the furnace. It is therefore desirable to improve the performance of lead melting furnaces.

### Disclosure of the invention

According to the present invention a method for operating a lead melting furnace as well as a lead melting furnace with the features of the independent claims are provided. Preferred embodiments and advantages of a method and a furnace according to the invention are subject of the dependent claims and of the following description.

According to the present invention, a first oxidant and fuel are provided to at least one burner unit such that combustion with a lambda value less than 1.3 is performed. A second oxidant is injected into the lead melting furnace such that an oxidation of at least one product in an off-gas of the combustion is performed by the injected second oxidant.

The lead melting furnace according to the invention is adapted to be operated according to the method of the present invention. For this purpose, a control unit for controlling the lead melting furnace can especially be provided which is adapted to perform the method according to the present invention. Advantages and preferred embodiments of the method and the furnace according to the invention arise from the following description in an analogous manner.

The lead melting furnace comprises at least one burner unit to perform combustion of the fuel and the first oxidant as well as at least one oxidant injection element for injection of the second oxidant. The lead melting furnace is particularly used for melting, smelting or refining the lead metallic material. In particular the lead melting furnace is a reverberatory furnace or lead reverberatory furnace, in which the lead metallic material to be melted is in direct contact with the fuel or the flame of the combustion and with the off-gas and wherein thermal radiation within the furnace is reflected or reverberated from the walls and the ceiling of the reverberatory furnace.

The lambda value or air-fuel equivalence ratio λ particularly provides a relation of the present amount of the first oxidant to a stoichiometric amount of the first oxidant needed for complete combustion of the fuel and the first oxidant. A lambda value of 1 refers to a stoichiometric or complete combustion such that the entire amount of fuel reacts with the entire amount of the first oxidant.

Usually, in common lead melting furnaces super-stoichiometric combustion is performed with a lambda value larger that 1.3, particularly larger than 1.33, wherein much more oxidant is provided than needed for a complete stoichiometric combustion. Therefore, in common lead melting furnaces a highly oxidizing, highly volatalizing atmosphere is created. In an oxidizing atmosphere of that kind there is the danger that the lead metallic material oxidizes or even vaporises.

In the course of the present invention a way of operating a lead melting furnace has been developed such that oxidization and vaporisation of metallic material can be reduced or even prevented. Particularly, the present invention provides a way of controlling the oxidation within the lead melting furnace. The amount of base metal oxidized can be managed to improve the performance of lead melting furnace.

According to the present invention combustion in the at least one burner unit is performed with a reduced stoichiometry compared to common lead melting furnaces, i.e. with a lambda value of less than 1.3. It has been found out in the course of the present invention that performing combustion with lambda values larger than 1.3, particularly larger than 1.33, is way too much for lead melting and yields significant danger of oxidizing or even vaporising the lead metallic material. Performing combustion with reduced lambda value of less than 1.3 significantly reduces the danger of oxidation and vaporisation of the lead metallic material and significantly increases productivity and yield of the lead melting furnace.

The off-gas of this combustion particularly comprises a large amount of pyrophoric products, particularly carbon monoxide. In super-stoichiometric combustions with lambda values larger than 1.3 this carbon monoxide could further react with the oxidant to carbon dioxide. However, as explained above hyper-stoichiometric combustions lead to an oxidizing atmosphere and thus to oxidation or vaporisation of the metallic material.

The present invention furthermore provides a possibility to further utilise products in the off-gas, particularly carbon monoxide, and to create further energy out of these products for melting the lead metallic material. For this purpose the second oxidant is injected into the lead melting furnace, particularly directly into the off-gas by means of the oxidant injection unit like a nozzle or lance. Thus, the product in the off-gas oxidizes with the injected second oxidant, wherein energy is released that can heat the lead metallic material.

In particular, carbon in the fuel reacts with the first oxidant, particularly oxygen, thus creating carbon monoxide as off-gas:

C + 0.5O₂ → CO

This reaction releases energy of 2.73 kWh/m³O₂. The CO as the product in the off-gas reacts with the injected second oxidant, particularly oxygen, thus creating carbon dioxide CO₂:

CO + 0.5O₂ → CO₂

This reaction releases energy of 7.01 kWh/m³O₂. Both these amounts of released energy can be used for heating and melting of the metallic material.

According to the invention, the amount of oxidant provided to the at least one burner unit is reduced by a predetermined amount or percentage compared with common lead melting furnaces in which usually combustions with lambda values larger than 1.3 are performed. Thus, there is no large excess of the first oxidant and oxidisation and vaporisation of the lead metallic material can be prevented. Instead of this economised amount or percentage of the first oxidant, a corresponding predetermined amount of the second oxidant is provided. Thus, the products in the off-gas due to the reduced amount of the first oxidant, can react with the second oxidant. Oxidant is thus particularly reduced from the at least one burner unit and redirected and injected into the furnace at a different position, especially directly into the off-gas. Thus, oxidant, fuel and products of the combustion are particularly diluted.

For lead, which is a metallic material with a very low melting point, the dilution of the furnace atmosphere and reactants, coupled with the systematic control of oxidation within the lead melting furnace provides distinct advantages. Particularly, predictable and controllable oxidation in the lead melting furnace can be performed by means of controlling chemical reactions involving oxidants and gaseous and/or solid fuel sources. Productivity of the lead melting furnace, e.g. measured in tons per hour, can be increased by improved heat transfer to the metallic material. Metallic yield can be improved by means of dilution of oxidant, fuel, and the products of combustion, i.e. products in the off-gas. Residence time of the products of combustion, i.e. products in the off-gas, within the furnace can be improved, thus further increasing the heat transfer to the melt, particularly by means of the dilution of oxidant, fuel and products of combustion. Refractory performance, e.g. measured in duration of refractory campaign and refractory consumption, e.g. measured in pounds per ton of lead produced, can be improved.

In common lead melting furnaces metallic yield of about 50% can be achieved. By means of the invention, the metallic yield of lead melting furnaces can significantly be increased. In lead melting, an increase of only 1% in metallic yield can correspond to a value of several millions of dollars. Thus, the invention can provide a huge economic advantage for lead production and lead melting furnaces.

According to a preferred embodiment the first oxidant and the fuel are provided to the at least one burner unit such that combustion is performed with a lambda value less than 1.25, preferably less 1.2, preferably less than 1.15, preferably less than 1.1, and more preferably less than 1.05. It is particularly preferred to perform the combustion with a lambda value in the range between 1.3 and 0.95. Particularly, the lambda value can be varied in order to effectively control the oxidation within the furnace.

According to a particularly preferred embodiment, the first oxidant and the fuel are provided to the at least one burner unit such that a sub-stoichiometric combustion with a lambda value less than 1 is performed. By means of the sub-stoichiometric combustion of that kind a smaller amount of the first oxidant is provided than needed for a complete stoichiometric combustion. It can thus be prevented that an amount of the first oxidant does not react with the fuel and accumulates in the furnace leading to an oxidizing atmosphere in the furnace. Thus, a reducing atmosphere is particularly created in the furnace and it can particularly be prevented that the metallic material oxidizes or vaporises. Thus, productivity, metallic yield and margin of the furnace can be increased.

The number of burner units and oxidant injection elements as well as their locations within the lead melting furnace, i.e. the specific locations where the combustion is performed and where the second oxidant is injected, and further the flow rates of the first oxidant, the second oxidant and the fuel can expediently be predetermined or varied in order to effectively control the oxidation of the lead melting furnace.

According to an advantageous embodiment, the second oxidant is injected into a portion or part of the lead melting furnace, where the off-gas of the combustion accumulates. The second oxidant is thus preferably injected directly into the accumulated off-gas. This portion can especially be an off-gas portion or exhaust portion of the furnace, especially in a head space of the furnace, at which an exhaust flue is arranged to extract the off-gas out of the furnace. In common lead melting furnaces, pyrophoric products in the off-gas like carbon monoxide oftentimes react with air or oxygen in the exhaust flue, thus producing energy in the exhaust flue, where it can not be utilised for melting the lead metallic material. By means of injecting the second oxidant into the furnace products in the off-gas, particularly carbon monoxide, can be oxidized in the lead melting furnace such that the enthalpy of that reaction is not lost but can be transferred by radiation to the lead metallic material.

Advantageously, the combustion is performed in a first portion of the lead melting furnace and the second oxidant is injected into a second portion of the lead melting furnace, which second portion being different from the first portion. This second portion is preferably the off-gas portion or exhaust portion of the furnace as explained above, especially in the head space of the furnace. Preferably, the at least one oxidant injection element, e.g. nozzles or lances, is provided in this second portion of the lead melting furnace. The first portion is preferably a combustion portion of the furnace, in which the at least one burner unit is provided. The first portion can be spatially separated from the second portion. It is particularly prevented that the second oxidant interacts with the fuel and the combustion and thus influences and increase the lambda value of the combustion.

It shall be understood that the lead melting furnace can comprise further portions, particularly a third portion or metallic material portion, in which the lead metallic material is arranged and melted or smelted. For example, this metallic material portion can be a bottom portion or bottom part of the lead melting furnace. The first and second portion can e.g. be provided in a top portion or top part of the lead melting furnace above the metallic material portion.

Preferably, the first oxidant, the fuel and the second oxidant are provided such that a reducing atmosphere is maintained in the lead melting furnace. For this purpose, an amount of the first oxidant and an amount of the fuel provided to the at least one burner unit as well as an amount of the second oxidant injected into the lead melting furnace are preferably controlled such that this reducing atmosphere is controlled. It can thus be prevented that oxidisation or vaporisation of the lead metallic material occurs.

According to a particularly preferred embodiment an amount of the first oxidant and an amount of the fuel provided to the at least one burner unit are controlled such that the lambda value of the sub-stoichiometric combustion is controlled. Particularly, the amounts of the first oxidant and the fuel are controlled such that a predetermined lambda value is maintained, preferably a lambda value in the range between 0.9 and 1.3, more preferably in the range between 0.95 and 1.25, more preferably in the range between 0.96and 1.2 particularly preferred in the range between 0.98 and 1.1.

Further, by controlling the amounts of the first oxidant and the fuel as well as the lambda value also an amount of the products in the off-gas can particularly be controlled. Especially, an amount of the products created in the course of the combustion gas can be determined, such that an optimum amount of the second oxidant can be injected for the oxidisation of these products.

According to particularly advantageous embodiment an amount of the second oxidant injected into the lead melting furnace is controlled such that the oxidation of the at last one product in the off-gas is controlled. Thus, particularly a controlled oxidation of the product in the off-gas is performed. It can thus particularly be prevented that too much of the second oxidant is injected which would yield the danger of the second oxidant reacting with the lead metallic material.

Advantageously, a composition of the off-gas and/or an amount of the at least one product in the off-gas is determined. Particularly, this composition and/or this amount can be measured e.g. by sensors in the furnace or by extracting and evaluating test amounts of the off-gas from the furnace. Particularly, the amounts of O₂, CO and CO₂ in the off-gas can be determined. Preferably, the amount of the second oxidant injected into the lead melting furnace is controlled in dependence of the determined composition and/or the determined amount of the at least one product. This way, the oxidation of the at last one product in the off-gas can particularly precisely be controlled.

Preferably, a control algorithm for controlling the amount of the second oxidant injected into the lead melting furnace is established based on a heat balance and/or mass balances of a charging of organic material into the lead melting furnace. This way, the oxidation of the at last one product in the off-gas can precisely be controlled, e.g. also if a measurement of the composition of the off-gas or of the amount of products in the off-gas is not possible or unpractical.

Preferably, oxygen is provided as the first oxidant and/or as the second oxidant. It is also possible to provide air as the first oxidant and/or as the second oxidant. According to a particularly advantageous embodiment, oxygen is provided as both the first oxidant and the second oxidant. NOx emission can thus be reduced.

According to a preferred embodiment the at least one oxidant injection element is provided as at least one shrouded lance. This shrouded lance particularly does not protrude or extend into the furnace but is especially provided inside a wall or refractory wall of the lead melting furnace. Particularly, an opening or nozzle of the shrouded lance is shrouded with a material e.g. 304 grade stainless, preferred 316L stainless steel.

These shrouded lances particularly yield distinct advantages compared to common lances used for injecting jets of an oxidant or generally of a medium. If there are large amounts of dust and entrained liquid metal droplets in the atmosphere of the furnace, these particles and droplets can be recirculated by means of the jet and, due to their higher momentum, be deposited near the jet outlet, especially on the refractory wall and the lance itself, often referred to as accretions. These accretions could block the jet outlet or disturb the jet and reduce its recirculating efficiency, which could cause high maintenance, negate NOx reduction, or reduce homogeneous heating of the lead metallic material. These deposits could also deflect the jet towards the furnace refractory wall which could cause severe damage and even compromise safety of the furnace, preventing adequate flow of the jet medium. In this case it might even be necessary to idle the furnace until accretions are removed from the lance.

By means of the shrouded lances these disadvantages and dangers related to accretions can particularly be reduced or even prevented. It can particularly be prevented that dust and droplets are deposited on the shrouded lance itself, that an outlet of the shrouded lance is blocked, and that a jet of the second oxidant is disturbed.

It shall be noted that a burner unit in the sense of the present patent application can preferably comprise a burner, which is supplied with both the fuel and the first oxidant. However, it is also possible that a burner unit in the sense of the present patent application preferably comprises a burner, which is at least supplied with the fuel, and further an oxidant injection unit, e.g. a nozzle or lance, which supplies the first oxidant. Thus, the first oxidant can also be separately supplied independent of the burner.

Further advantages and developments of the invention are specified in the description and the associated drawings.

It goes without saying, that the features named above and still to be explained below can be used not only in the combination indicated respectively, but also in other combinations or in a stand-alone manner, without going beyond the scope of the present invention.

The invention is illustrated schematically in the drawings on the basis of exemplary embodiments and will be described in detail in the following with reference to the drawings.

### Description of drawings

- Fig. 1: schematically shows a lead melting furnace according to a preferred embodiment of the invention in a top view.
- Fig. 2: schematically shows a preferred embodiment of a method according to the invention as a block diagram.
- Fig. 3: schematically shows a section of a lead melting furnace according to a preferred embodiment of the invention.

### Detailed Description of the Drawing

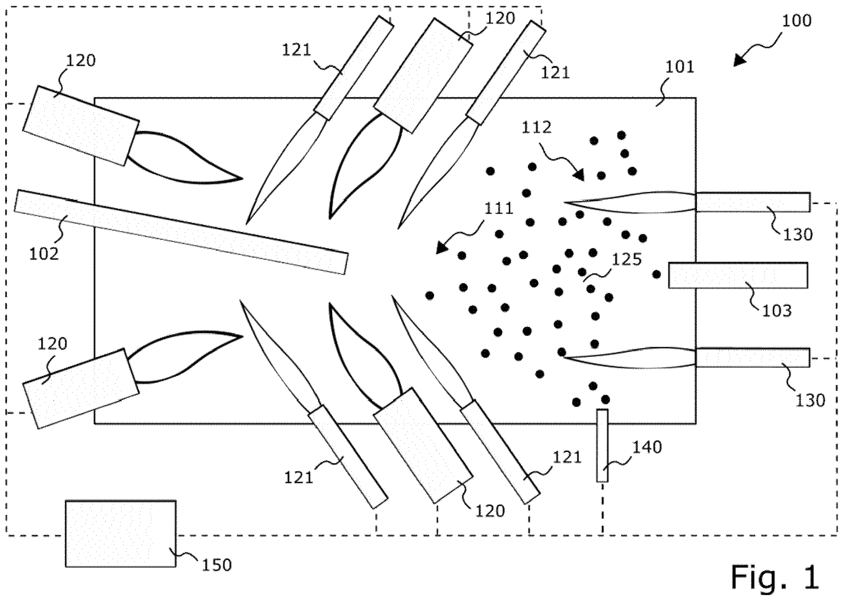

Fig. 1 schematically shows a lead melting furnace 100 according to a preferred embodiment of the invention in a top view. The lead melting furnace 100 is a reverberatory furnace for melting a lead material.

The reverberatory furnace 100 comprises a chamber 101. A continuous feed chute 102 is provided by means of which lead material to be smelted can be provided. The lead material is particularly arranged in a bottom portion of the chamber 101.

In a first portion or combustion portion 111 of the chamber 101 burner units are provided, particularly four burners 120 as well as four oxygen lances 121. Fuel, e.g. natural gas, and a first oxidant, preferably oxygen, can be provided to the burners 120. By means of the oxygen lances 121, an additional amount of the first oxidant, i.e. oxygen, can be provided.

Combustion of the fuel and the oxygen is performed producing an off-gas 125, which accumulates in a second portion or off-gas portion 112 of the chamber 101. An exhaust flue 103 is provided in this off-gas portion 112 by means of which the off-gas 125 can be extracted from the chamber 101.

Further, oxidant injection elements 130 in the form of shrouded lances are provided in this off-gas portion 112 in order to inject a second oxidant, preferably also oxygen, into the furnace 100, preferably directly into the off-gas 125. A sensor 140 is provided to measure a composition of the off-gas 125, particularly to measure an amount of carbon monoxide in the off-gas 125.

A control unit 150 is provided to operate and control the reverberatory furnace 100. Particularly, the control unit 150 controls the amounts of the first oxidant and the fuel provided for the burner units as well as the amount of the second oxidant injected by means of the shrouded lances 130. Moreover, the control unit 150 evaluates the measurements of sensor 140.

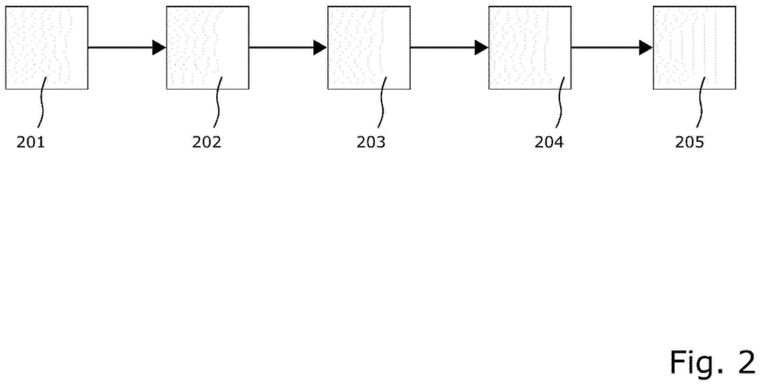

The control unit 150 is further adapted to perform a preferred embodiment of a method according to the invention, which is schematically shown in Fig. 2 as a block diagram.

In step 201 an amount of the fuel and an amount of oxygen to be provided to the burners 120 and the oxygen lances 121 are determined such that a combustion of the fuel and the oxygen with a lambda value less than 1.3 is performed, particularly with a lambda value in the range of 0.95.7 and 1.3, e.g. with a lambda value of 0.98.

In step 202 the determined amounts of fuel and oxygen are provided and the combustion is performed, in the course of which the exhaust gas 125 is created and accumulates in the off-gas portion 112 of the chamber 101.

By means of the sub-stoichiometric combustion with the lambda value of 0.98 a smaller amount of oxygen is provided than needed for a complete stoichiometric combustion. Therefore, there is particularly no excess oxygen in the chamber 101, wherein it can be prevented that the lead material oxidizes or evaporates.

In the course of the sub-stoichiometric combustion the oxygen reacts with carbon in the natural gas and produces carbon monoxide. Thus, the off-gas 125 comprises a large amount of carbon monoxide.

In step 203 the composition of the off-gas, particularly the amount of CO in the off-gas 125 is determined by means of the sensor 140. In dependence of this composition an amount of oxygen is determined to be injected into the chamber 101 by means of the shrouded lances 130. This amount of oxygen to be injected is particularly determined such that the CO in the off-gas oxidizes and that a reducing atmosphere in the chamber can be maintained.

In step 204 the oxygen is injected by means of the shrouded lances 130 and the CO in the off-gas 125 reacts with the injected oxygen producing carbon dioxide CO₂. Afterwards, in step 205 the CO₂ rich off-gas can be exhausted by means of the exhaust flue 103.

By means of the oxidisation of CO energy in the form of thermal radiation is released, which can particularly reverberate at the walls of the chamber 101 and can be transferred into the lead material.

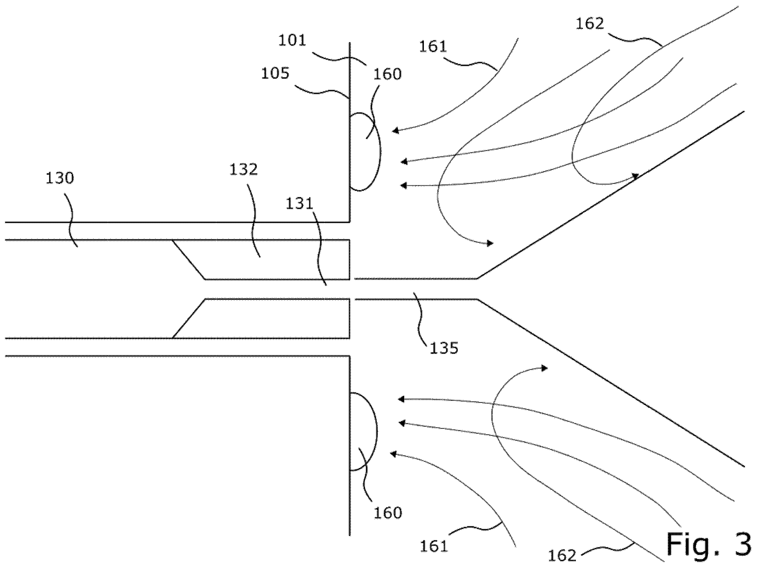

Fig. 3 schematically shows a section of the lead melting furnace 100 according to a preferred embodiment of the invention.

Particularly, the oxidant injection element 130 in the form of the shrouded lance is shown in Fig. 3. The shrouded lance 130 comprises a nozzle or opening 131 shrouded with a material 132, e.g. 304 grade stainless steel, preferred 316 L stainless steel. Through this opening 131 the second oxidant, i.e. oxygen, is injected into the chamber 101 in the form of a jet 135. The shrouded lance 130 is provided in a wall or refractory wall 105 of the chamber 101 and particularly does not protrude into the chamber 101.

If there are large amounts of dust and entrained liquid metal droplets in the atmosphere of the chamber 101, these particles and droplets can be recirculated by means of the jet 135. As shown in Fig. 3 a part 162 of these particles and droplets is recirculated into the chamber 101. Another part 161, however, can deposit on the refractory wall 105 as so-called accretion 160.

By means of the specific design and arrangement of the shrouded lance 130 it can particularly be prevented, that dust particles and metal droplets are deposited on the shrouded lance 130 and that the nozzle 131 is blocked by accretions 160 of that kind.

### Reference list

- 100: lead melting furnace, reverberatory furnace
- 101: chamber
- 102: continuous feed chute
- 103: exhaust flue
- 105: refractory wall
- 111: first portion, combustion portion
- 112: second portion, off-gas portion
- 120: burner
- 121: oxygen lance
- 125: off-gas
- 130: oxidant injection element, shrouded lance
- 131: nozzle
- 132: shroud material
- 135: oxygen jet
- 140: sensor
- 150: control unit
- 160: accretion of dust particles and liquid metal droplets
- 161: particles and liquid metal droplets
- 162: particles and liquid metal droplets

- 201 to 205: method step

## Claims

1. A method for operating a lead melting furnace (100) for melting a lead metallic material,
**characterised in that**
a first oxidant and fuel are provided to at least one burner unit (120, 121) such that combustion with a lambda value less than 1.3 is performed (202); and
a second oxidant is injected into the lead melting furnace (100) such that an oxidation of at least one product in an off-gas (125) of the combustion is performed by the injected second oxidant (204).

2. The method according to claim 1, wherein the first oxidant and the fuel are provided to the at least one burner unit (120, 121) such that combustion is performed (202) with a lambda value less than 1.25, preferably less 1.2, preferably less than 1.15, preferably less than 1.1, preferably less than 1.05.

3. The method according to claim 1 or 2, wherein the first oxidant and the fuel are provided to the at least one burner unit (120, 121) such that a sub-stoichiometric combustion with a lambda value less than 1 is performed (202).

4. The method according to any one of the preceding claims, wherein the second oxidant is injected into a portion (112) of the lead melting furnace (100), where the off-gas (125) of the combustion accumulates.

5. The method according to any one of the preceding claims, wherein the combustion is performed in a first portion (111) of the lead melting furnace (100) and wherein the second oxidant is injected into a second portion (112) of the lead melting furnace (100).

6. The method according to any one of the preceding claims, wherein the first oxidant, the fuel and the second oxidant are provided such that a reducing atmosphere is maintained in the lead melting furnace (100).

7. The method according to any one of the preceding claims, wherein an amount of the first oxidant and an amount of the fuel provided to the at least one burner unit (120, 121) are controlled such that the lambda value of the combustion is controlled.

8. The method according to any one of the preceding claims, wherein an amount of the second oxidant injected into the lead melting furnace (100) is controlled such that the oxidation of the at least one product in the off-gas (125) is controlled.

9. The method according to claim 8, wherein a composition of the off-gas (125) and/or an amount of the at least one product in the off-gas (125) is determined (203) and wherein the amount of the second oxidant injected into the lead melting furnace (100) is controlled in dependence of the determined composition and/or the determined amount of the at least one product.

10. The method according to claim 8 or 9, wherein a control algorithm for controlling the amount of the second oxidant injected into the lead melting furnace (101) is established based on a heat balance and/or mass balances of a charging of organic material into the lead melting furnace (100).

11. The method according to any one of the preceding claims, wherein oxygen is provided as the first oxidant and/or as the second oxidant.

12. A lead melting lead melting furnace (100) for melting a lead metallic material comprising at least one burner unit (120, 121) and at least one oxidant injection element (130), adapted to be operated according to a method according to any one of the preceding claims.

13. The lead melting furnace (100) according to claim 12, wherein the at least one burner unit (120, 121) is provided in a first portion (111) of the lead melting furnace (100) and wherein the oxidant injection element (130) is provided in a second portion (112) of the lead melting furnace (100).

14. The lead melting furnace according to claim 12 or 13, wherein the at least one oxidant injection element (130) is provided as at least one shrouded lance.
